# EUROPÄISCHE PATENTSCHRIFT

(11) **EP 2 963 181 B1**
(45) Veröffentlichungstag und Bekanntmachung des Hinweises auf die Patenterteilung: **16.08.2017**
(21) Anmeldenummer: 15001830.7
(22) Anmeldetag: 20.06.2015
(51) Int. Cl.: E01C 19/48

(54) **STRASSENFERTIGER**
PAVER
FINISSEUSE DE ROUTE

(30) Priorität: 02.07.2014 DE 102014109272
(43) Veröffentlichungstag der Anmeldung: 06.01.2016
(60) Teilanmeldung: 17001023.5
(73) Patentinhaber: Dynapac GmbH, 26203 Wardenburg (DE)
(72) Erfinder: Verstraeten, Jan, 26188 Edewecht (DE); Mooren, Axel, 26209 Hatten-Sandkrug (DE); Lürding, Eberhard, 26209 Hatten (DE)
(74) Vertreter: Möller, Friedrich

(56) Entgegenhaltungen:
- WO-A1-00/35698
- DE-A1- 4 134 840
- DE-A1- 19 511 909
- DE-B- 1 213 464
- DE-U1- 29 508 396

## Beschreibung

Die Erfindung einen Straßenfertiger gemäß dem Oberbegriff des Anspruchs 1. Ein derartiger Straßenfertiger ist aus DE29508396U1, WO0035698A1, DE1213464B und DE4134840A1 bekannt. Straßenfertiger dienen der Herstellung von Straßenbelägen aus Asphalt und anderen Straßenbaumaterialien wie beispielsweise Beton. Solche Straßenfertiger sind selbstfahrend ausgebildet. Dazu verfügen sie über ein Fahrwerk, bei dem es sich um ein Kettenfahrwerk oder ein Radfahrwerk handeln kann. Straßenfertiger weisen in Einbaurichtung gesehen mindestens einen vorderen Vorratsbehälter zur Aufnahme des Straßenbaumaterials, insbesondere heißen bituminösen Asphaltmaterials auf. Das Asphaltmaterial wird vom Vorratsbehälter mittels eines Förderers unter einer Plattform mit einem Bedienstand zu einer hinteren Verteilerschnecke transportiert, die das noch heiße bituminöse Straßenbaumaterial über die Arbeitsbreite des Straßenfertigers vor mindestens einer hinteren Einbaubohle verteilt.

Zum betreiben eines Straßenfertigers sind eine Vielzahl von Betriebs- und Maschinenparametern festzulegen. In Abhängigkeit von diesen Parametern erfolgt der Betrieb des Straßenfertigers. Ändern sich während des Betriebes des Straßenfertigers diese Parameter außerplanmäßig, verläuft der Betrieb des Straßenfertigers fehlerhaft. Es kann aber auch erwünscht sein, dass die genannten Parameter absichtlich während des Betriebes des Straßenfertigers geändert werden, um den Betrieb der sich eventuell ändernden Anforderungen anzupassen.

Die Betriebs- und Maschinenparameter sowie weitere für die Herstellung des Straßenbelags wesentlichen Parameter werden von einer Bedienperson vor oder während der Herstellung des Straßenbelags manuell eingegeben. Dazu sehen bekannte Straßenfertiger einen Bedienstand vor, der sich auf dem Straßenfertiger befindet. Üblicherweise besteht der Bedienstand aus einer offenen oder geschlossenen Kabine, von der aus die Bedienperson einen Überblick über den gesamten Straßenfertiger und einen Teil eines Arbeitsbereiches hat.

In dem Bedienstand befindet sich ein Fahrersitz, auf dem die Bedienperson während des Betriebes Platz nehmen kann. Des Weiteren befinden sich in dem Bedienstand ein Armaturenbrett und ein Steuermittel. Während das Armaturenbrett sämtliche zum Betrieb des Straßenfertigers wichtigen Parameter und Größen anzeigt, bzw. Schaltvorrichtungen wie Knöpfe oder dergleichen aufweist, lässt sich über die Steuermittel der Straßenfertiger beschleunigen, bremsen und steuern. Zum Bedienen bzw. Steuern des Straßenfertigers muss die Bedienperson auf dem Fahrersitz sitzen, weil sie nur von dort aus Zugriff auf die Steuermittel bzw. auf das Armaturenbrett hat. Dadurch dass die Bedienperson an den Fahrersitz gebunden ist, ist ihr Aktionsradius bzw. ihr Überblick bzw. Sicht auf den herzustellenden Straßenbelag sehr eingeschränkt. Sobald die Bedienperson sich jedoch von dem Fahrersitz erhebt oder gar den Bedienstand verlässt, verliert sie die Kontrolle über den Straßenfertiger bzw. stoppt der Betrieb des Straßenfertigers aus Sicherheitsgründen. Diese eingeschränkte Sicht der Bedienperson ist besonders bei engen und/oder schwierigen Passagen des herzustellenden Straßenbelags von Nachteil. Außerdem ist es als besonders nachteilig bzw. unkomfortabel anzusehen, dass der Fahrersitz von dem Steuermittel bzw. dem Armaturenbrett beabstandet ist. Besonders bei Bedienpersonen die aus anatomischen Gründen Schwierigkeiten haben, im Sitzen die Steuermittel zu erreichen, gestaltet sich die Bedienung des Straßenfertigers als sehr unkomfortabel.

Für den Betrieb bzw. vor der Herstellung des Straßenbelags muss der Straßenfertiger auf die örtlichen Bedingungen einnivelliert werden. Dazu sind bisher mindestens zwei Personen notwendig, nämlich eine die sich im Bedienstand aufhält und eine weitere, die sich neben dem Straßenfertiger aufhält. Während die Person neben dem Straßenfertiger Anweisungen gibt, wie der Straßenfertiger zu nivellieren ist, gibt die Person im Bedienstand entsprechende Parameter in eine Steuervorrichtung ein. Nivelliert werden müssen vor allem die Einbaubohle in Länge, Form und Höhe und die Ausrichtung des Straßenfertigers. Anhand der anfänglichen Nivellierung wird der Straßenbelag hergestellt. Die Nivellierung durch zwei Personen ist sehr kostenintensiv und weist diverse Schwierigkeiten auf. So lassen sich, insbesondere bei einer lauten Geräuschkulisse, wie sie auf Baustellen üblich ist, Kommunikationsschwierigkeiten und damit verbundene Missverständnisse nicht vermeiden. Ein falsch einnivellierter Straßenfertiger führt dazu, dass der gesamte Straßenbelag fehlerhaft hergestellt wird. Dies ist mit enormen Kosten verbunden und bedeutet sogleich einen zeitlichen Mehraufwand, der gerade im Straßenbau sehr kritisch ausfallen kann.

Straßenfertiger, insbesondere Radfertiger sind üblicherweise mit einer servohydraulischen Lenkeinrichtung ausgestattet. Demnach werden Lenkzylinder der einzelnen zu lenkenden Räder des Radfertigers direkt beim betätigen des Steuermittels angesteuert. Dabei wird durch das Lenken über die Hydraulik ein Druck auf die Lenkzylinder ausgeübt, wodurch die Räder entsprechend bewegt werden. Die Lenkeigenschaften des Radfertigers sind durch eine derartige servo-hydraulische Lenkeinrichtung begrenzt. So lässt sich beispielsweise eine Fernsteuerung der Lenkeinrichtung nur schwer realisieren.

Der Erfindung liegt nun die Aufgabe zugrunde, einen Straßenfertiger zu schaffen, bei dem die Bedienung, insbesondere die Steuerung komfortabel und einfach ausgestaltet ist.

Ein Straßenfertiger zur Lösung der genannten Aufgabe weist die Merkmale des Anspruchs 1 auf. Demnach ist es vorgesehen, dass die Antriebe der mindestens zwei angetriebenen Räder unabhängig voneinander elektrisch ansteuerbar sind. Außerdem ist es vorgesehen, dass durch elektrische Ansteuerung der Antriebe die mindestens zwei, vorzugsweise vier, angetriebenen Räder unabhängig voneinander oder paarweise zusammen betreibbar sind, insbesondere einzeln oder zusammen beschleunigt oder bremsbar sind. Durch diese elektrische Ansteuerung der angetriebenen Räder können die Lenkeigenschaften des Straßenfertigers verbessert werden. So wird beispielsweise eine Drehung des Straßenfertigers auf der Stelle bzw. in einem sehr kleinen Bereich möglich. Dies ist insbesondere vom Vorteil, wenn die Herstellung des Straßenbelags in einem sehr engen und kleinen Bereich stattfinden muss.

Bevorzugte Ausführungsbeispiele von Straßenfertigern gemäß der Erfindung werden nachfolgend anhand der Zeichnungen näher erläutert. In dieser zeigen:
- Fig. 1: eine schematische Seitenansicht eines Straßenfertigers,
- Fig. 2: eine schematische Darstellung eines Fahrersitzes mit einem Bedienelement,
- Fig. 3: eine schematische Darstellung des Bedienelements,
- Fig. 4: eine schematische Darstellung eines Moduls des Bedienelements,
- Fig. 5: eine schematische Darstellung eines Nivelliersystems,
- Fig. 6: ein Signalblockschaltbild einer elektrischen Steuerung, und
- Fig. 7: ein Signalblockschaltbild einer elektrischen Steuerung.

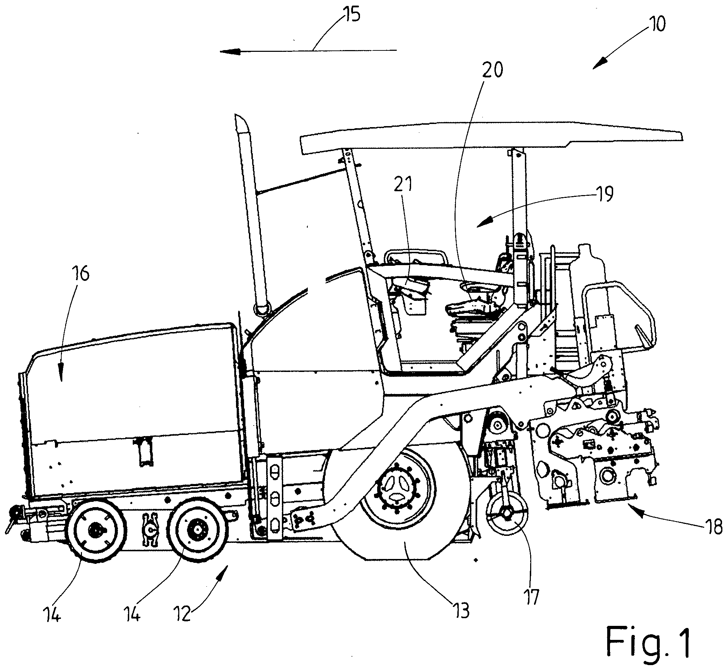

Ein in Fig. 1 schematisch dargestellter Straßenfertiger 10 dient zur Herstellung von Straßenbelägen, dabei kann es sich um Straßenbeläge jeder Art handeln.

Der Straßenfertiger 10 ist selbstfahrend ausgebildet. Dazu verfügt er über eine zentrale Antriebseinheit, die beispielsweise einen Verbrennungsmotor aufweist, der Hydraulikpumpen zur Versorgung von Hydraulikmotoren und gegebenenfalls einen Generator zur Erzeugung von Energie für elektrische Antriebe antreibt.

Der Straßenfertiger 10 weist ein Fahrwerk 12 auf, das im gezeigten Ausführungsbeispiel als Radfahrwerk ausgebildet ist, aber auch als Raupenfahrwerk oder ein anderes Fahr- bzw. Laufwerk ausgebildet sein kann. Das in Fig. 1 dargestellte Fahrwerk 12 weist zwei Antriebsräder 13 und vier lenkbare Räder 14 auf. Die Antriebsräder 13 werden von der Antriebseinheit derart angetrieben, dass der Straßenfertiger 10 in Fertigungsrichtung 15 vorwärts bewegbar ist.

In Fertigungsrichtung 15 gesehen ist vor der Antriebseinheit ein wannen- bzw. muldenartig ausgebildeter Vorratsbehälter 16 angeordnet. Der Vorratsbehälter 16 nimmt einen Vorrat des zur Herstellung des Straßenbelags dienenden Materials, beispielsweise Asphalt, auf. Gegebenenfalls können auch mehrere Vorratsbehälter vorgesehen sein. Durch nicht gezeigte Förderorgane wird das Straßenbaumaterial vom Vorratsbehälter 16 unter der Antriebseinheit hindurch zum, in Fertigungsrichtung 15 betrachtet, hinteren Ende des Straßenfertigers 10 transportiert. Von einer hinter dem Fahrwerk 12 angeordneten Verteilerschnecke 17 wird das Straßenbaumaterial über die gesamte Arbeitsbreite des Straßenfertigers 10 verteilt. Dabei gelangt ein Vorrat des Straßenbaumaterials vor eine, hinter der Verteilerschnecke 17 und dem Fahrwerk 12 angehängte, auf- und abbewegbaren hinter Einbaubohle 18.

Der Straßenfertiger 10 wird von einer nicht dargestellten Bedienperson von einem Bedienstand 19 aus gesteuert. Dieser Bedienstand 19 kann als geschlossene oder offene Kabine ausgebildet sein. Dabei weist der Bedienstand einen Fahrersitz 20 und ein Bedienpult 21 auf.

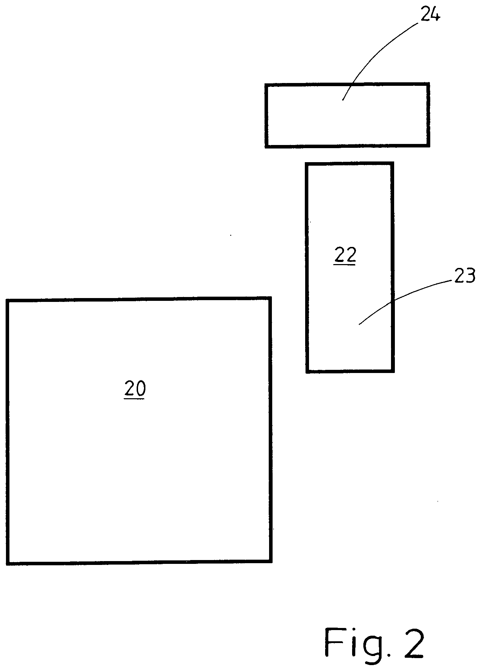

Dem Fahrersitz 20 bzw. einer Armlehne 22 des Fahrersitzes 20 kann ein Bedienelement 23 zugeordnet sein (Fig. 2). Über dieses in die Armlehne 22 integrierte Bedienelement 23 kann die auf dem Fahrersitz 20 sitzende Bedienperson den Betrieb des Straßenfertigers steuern und kontrollieren. Durch die Integrierung des Bedienelements 23 in die Armlehne 22 behält die Bedienperson bei jeglicher Orientierung des Fahrersitzes 20 die Kontrolle bzw. die Möglichkeit den Straßenfertiger 10 zu bedienen. Auch wenn beispielsweise der Fahrersitz 20 um 180 Grad gedreht ist oder zu einer Seite verschoben ist, bleibt die relative Positionierung der Bedienperson zum Bedienelement 23 gleich.

Die von der Bedienperson vorgenommenen Einstellungen bzw. eingestellten Parameter aber auch die Betriebs- und Maschinenparameter lassen sich in einem Display 24, was ebenfalls dem Fahrersitz 20 zugeordnet ist, darstellen bzw. ablesen. Das Display 24 kann dabei entweder direkt an der Armlehne 22 des Fahrersitzes 20 befestigt sein, oder sich am Bedienpult 21 des Bedienstandes 19 befinden. Die relative Ausrichtung der Armlehne 22 zum Fahrersitz 20 ist nicht auf die in der Figur 2 dargestellten eingeschränkt. Vielmehr kann das Bedienelement 23 auch in einer linken Armlehne 22 integriert sein oder einem beliebigen anderen Teil des Fahrersitzes 20 zugeordnet sein.

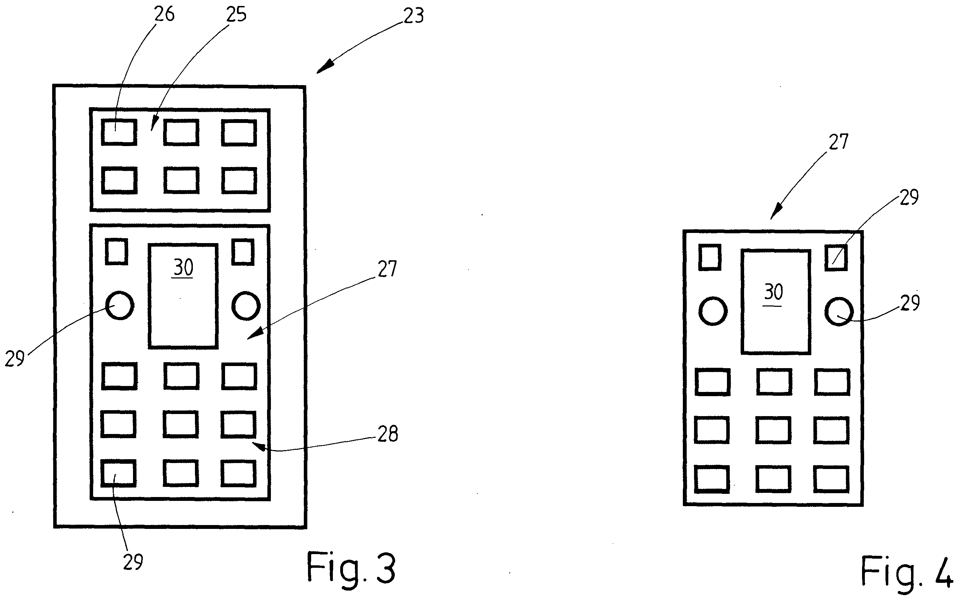

Das Bedienelement 23 weist ein fest mit dem Bedienelement 23 verbundenes Eingabefeld 25 auf (Fig. 3). Dieses Eingabefeld 25 kann beispielsweise Tasten 26 oder andere Eingabemittel aufweisen. Über die Tasten 26 können verschiedene Betriebs-, Maschinen- oder Herstellungsparameter manuell von dem Fahrersitz 20 aus eingegeben werden. Des Weiteren weist das Bedienelement 23 ein Modul 27 auf. Dieses Modul 27 ist zunächst fest im Bedienelement 23 angeordnet bzw. arretiert. Es bildet im in Figur 3 dargestellten Zustand eine Einheit mit dem Bedienelement 23. Das Modul 27 weist ebenso ein Eingabefeld 28 mit verschiedenen Eingabemitteln 29 auf. Bei diesem Eingabemittel 29 kann es sich um Taster oder Drehknöpfe oder ähnlichem handeln. Des Weiteren weist das Modul 27 ein Display 30 auf. Dieses Display 30 dient zur Darstellung von eingegebenen Werten bzw. Parametern oder der Darstellung von aktuellen Betriebs- oder Maschinenparametern. Das Display 30 kann auch als Touchscreen ausgebildet sein, so dass es auch als Eingabemittel dienen kann.

Das Modul 27 kann aus dem Bedienelement 23 entnommen werden (Fig. 4). Das Entnehmen erfolgt durch leichte Druckausübung auf das Modul 27 oder eine ähnliche Entrasthandlung. Das Modul 27 im vom Bedienelement 23 gelösten Zustand kann als mobiles Bedienelement betrachtet und eingesetzt werden. Über das Modul 27 lassen sich alle Hauptfunktionen des Straßenfertigers 10 steuern bzw. alle zum Betrieb des Straßenfertigers 10 notwendigen Parametern einstellen und ablesen. Dabei kann das Modul 27 über ein Kabel mit dem Bedienelement 23 oder dem Bedienpult 21 des Bedienstandes 19 verbunden sein. Es ist außerdem vorgesehen, dass das Modul 27 alternativ kabellos, das heißt beispielsweise per Funk oder Bluetooth oder WLAN, mit dem Bedienelement 23 bzw. dem Bedienpult 21 verbunden ist. Das Bedienelement 23 weist zum empfangen bzw. senden entsprechende komplementäre Sender bzw. Empfänger auf (Fig. 4). Das Modul 27 tauscht unabhängig von der Verbindung Daten mit dem Bedienelement 23 und oder mit dem Bedienpult 21 aus. Zum Empfang bzw. Senden von Signalen weist das Modul 27 nicht dargestellte Sender bzw. Empfänger auf.

Vor Beginn der Herstellung des Straßenbelags muss der Straßenfertiger 10 insbesondere die Einbaubohle 18 ausgerichtet bzw. einnivelliert werden. Zum Einnivellieren weist der Straßenfertiger 10 bzw. die Einbaubohle 18 Sensoren 31, 32 auf. Bei diesen Sensoren 31, 32 kann es sich um Abstandssensoren, Neigungssensoren, Einpegelungssensoren oder dergleichen handeln. Diese Sensoren 31, 32 sind an verschiedenen Positionen des Straßenfertigers 10 bzw. der Einbaubohle 18 positioniert. Gesteuert werden diese Sensoren 31, 32 über Bedieneinheiten 33, 34. Diese Bedieneinheiten 33, 34 weisen beispielsweise ein Display 35 und ein Eingabefeld 36 auf. Die Bedieneinheiten kommunizieren mit den Sensoren 31, 32 kabellos. Dabei werden sowohl Daten von den Bedieneinheiten 33, 34 an die Sensoren 31, 32 gesendet wie zum Beispiel Einstellungsparameter; die Sensoren 31, 32 senden aber auch die aufgenommenen Messdaten an die Bedieneinheiten 33, 34 zurück. Die empfangenen Daten werden beispielsweise von den Displays 35 der Bedieneinheiten 33, 34 direkt dargestellt, sodass eine Bedienperson über die Eingabefelder 36 weitere Eingaben wie beispielsweise Korrekturen der Nivellierung vornehmen kann.

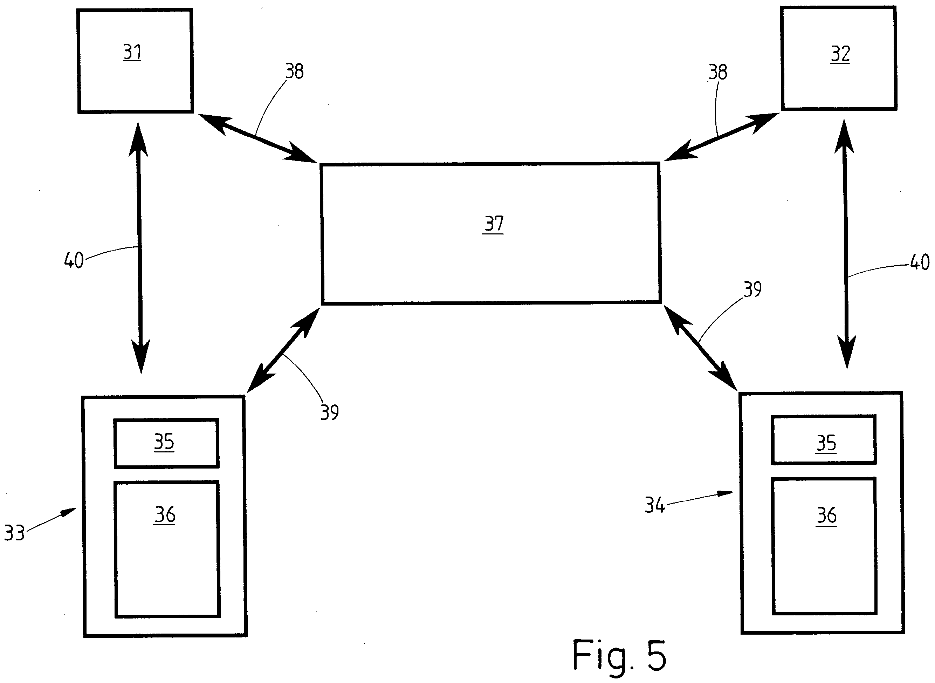

Sowohl die Sensoren 31, 32 als auch die Bedieneinheiten 33, 34 stehen in Verbindung mit einem zentralen Prozessrechner 37 des Straßenfertigers 10. In diesem Prozessrechner 37 laufen alle Signale und Daten der Sensoren 31, 32 und der Bedieneinheiten 33, 34 zusammen. So sind die Sensoren 31, 32 direkt über ein Kabel oder kabellos über Funk mit dem Prozessrechner 37 verbunden (wie in der Fig. 5 durch Pfeile 38 dargestellt). Andererseits kommunizieren die Bedieneinheiten 33 ,34 auch über Kabel oder kabellos über Funk mit dem Prozessrechner 37 (wie in Fig. 5 durch Pfeile 39 dargestellt). Durch den Prozessrechner 37 werden sämtliche Daten der Sensoren 31, 32 ausgewertet und weiterverarbeitet. So kann bei einer noch nicht ordnungsgemäßen Nivellierung ein Signal an die Sensoren 31, 32 oder die Bedieneinheiten 33, 34 ausgegeben werden, um die Nivellierung zu korrigieren. Dadurch steht der Prozessrechner außerdem in Verbindung mit nichtdargestellten Motoren zur Steuerung beispielsweise der Einbaubohle 18. Die Sensoren 31, 32 kommunizieren, wie durch die Pfeile 40 der Fig. 5 dargestellt, mit den Bedieneinheiten 33, 34.

Der Prozessrechner 37 ist außerdem verbunden mit dem Bedienelement 23 bzw. mit dem Modul 27, so dass der Prozessrechner 37 des Straßenfertigers 10 alle Maschinen-, Betriebs- und Herstellungsparameter erfasst und abspeichert. Des Weiteren dient der Prozessrechner 37 zur Optimierung des Betriebes des Straßenfertigers 10 und gibt entsprechend Signale an die Steuereinheiten bzw. Motoren aus.

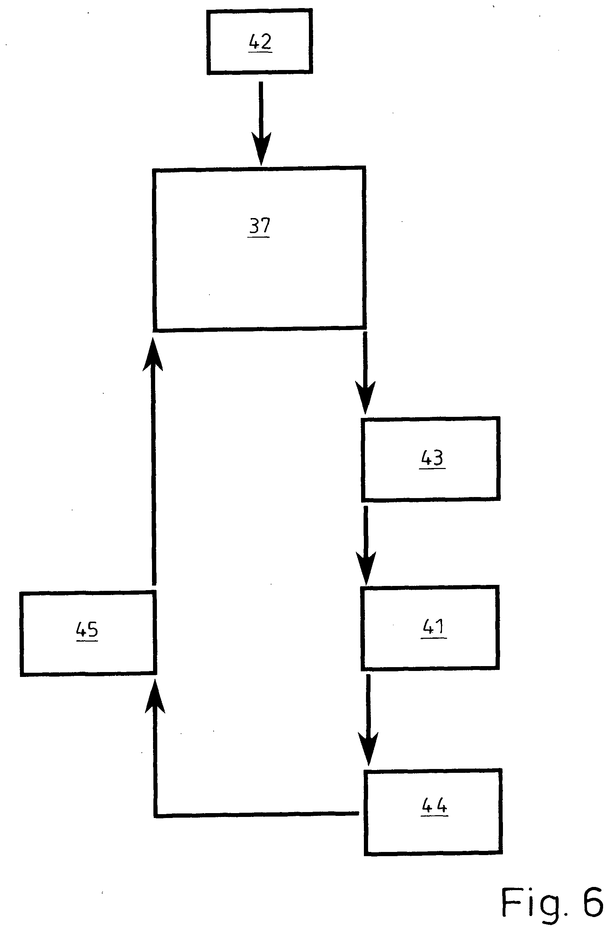

Bei den hier dargestellten erfindungsgemäßem Straßenfertiger 10 bzw. Radfertiger sind Lenkzylinder 41 der steuerbaren Räder 14 elektrisch ansteuerbar. Diese elektrische Ansteuerung bzw. Steuerung der Lenkzylinder 41 erfolgt auch über den zentralen Prozessrechner 37 des Straßenfertigers 10 (Fig. 6). Bei dieser elektrischen Steuerung der Lenkzylinder 41 der steuerbaren Räder 14 wird über einen Lenkwinkel-Sollwertgeber 42, bei dem es sich beispielsweise um ein Potentiometer, Inkrementalgeber oder ähnliches handelt und dem Bedienelement 23 zugeordnet sein kann, ein Sollwert für den Lenkwinkel vorgegeben. Dieser Sollwert wird an den Prozessrechner 37 übergeben (Fig. 6). Der Prozessrechner 37 steuert wiederrum auf der Basis der Sollwerte des Lenkwinkel-Sollwertgebers 42 ein Steuerventil 43 an. Diese elektrische Ansteuerung des Steuerventils 43 bewirkt, dass der Lenkzylinder 41 in definierter Menge mit einem Hydrauliköl versorgt wird. Durch diese Versorgung des Lenkzylinders 41 mit Hydrauliköl führt dazu, dass der Lenkzylinder 41 über eine Lenkungsachse 44 der Räder 14 den Einschlagwinkel der Räder 14 verstellt, und zwar so lange, bis der durch den Lenkwinkel-Istwertgeber 45 ermittelte Lenkwinkel mit dem durch den Lenkwinkel-Sollwertgeber 42 voreingestellten Sollwert des Lenkwinkels übereinstimmt. Diese rückkopplungsartige Einstellung des Lenkwinkels wird durch den Prozessrechner 37 gesteuert. Diese in der Fig. 6 durch ein Blockschaltbild dargestellte elektrische Ansteuerung der Lenkzylinder 41 zum Lenken der Räder 14 erfolgt für jedes lenkbare Rad 14 individuell. Es können aber auch Räder 14 parallel oder paarweise zusammengekoppelt werden, sodass sie gleichermaßen angesteuert werden.

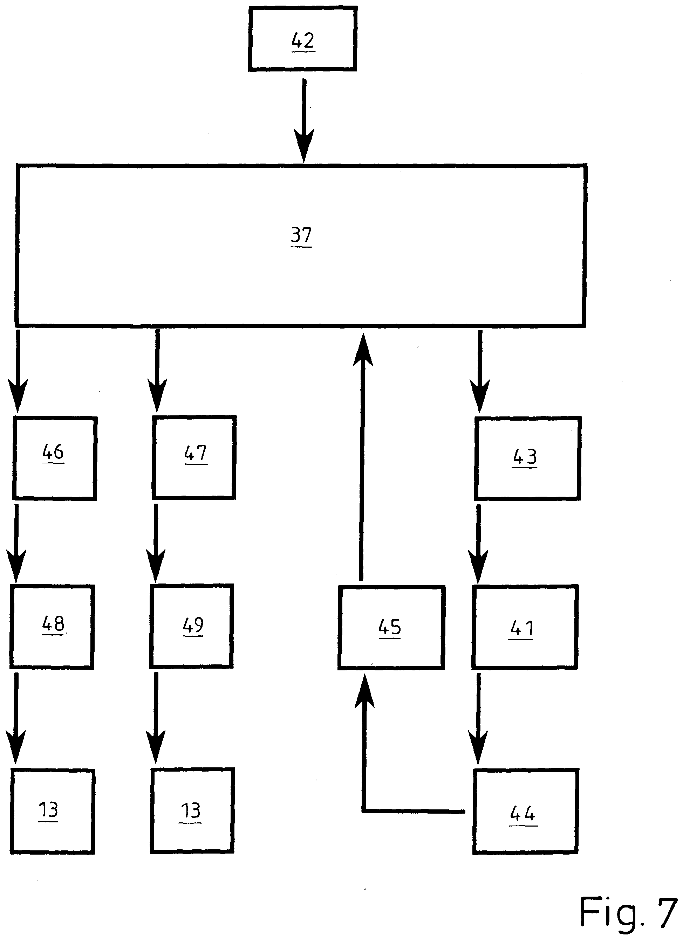

Zusätzlich zu der eben beschriebenen elektrischen Ansteuerung der Lenkzylinder 41 zur Steuerung der steuerbaren Räder 14 können auch die Antriebsräder 13 derart angesteuert werden, um das Lenkverhalten bzw. ein Lenkradius des Straßenfertigers 10 zu verbessern, insbesondere zu verkleinern (Fig. 7). Dabei erfolgt die Steuerung über die Räder 14 wie soeben beschrieben (Figur 7). Zusätzlich kann die Drehzahl der nicht dargestellten Motoren für die Antriebsräder 13 individuell verändert werden. Dazu wird zunächst genau wie zuvor beschrieben durch den Lenkwinkel-Sollwertgeber 42 ein Lenkwinkel-Sollwert an den Prozessrechner 37 übertragen. Dieser steuert dann Steuerventile 46, 47, die eine entsprechende Menge Hydrauliköl den Motoren 48, 49 zuführt, so dass der Lenkradius der Antriebsräder 13 verändert wird, bis der durch den Lenkwinkel-Sollwertvorgeber 42 vorbestimmte Lenkwinkel erreicht wird. Dabei erfolgt eine ähnliche Rückkopplung über einen nicht dargestellten Lenkwinkel-Istwertgeber der Räder 13 mit dem Prozessrechner 37, wie für die lenkbaren Räder 14 dargestellt.

Bei den Antriebsrädern 13 erfolgt somit die Lenkung nicht über Lenkzylinder 41, sondern vielmehr durch eine Beschleunigung bzw. Abbremsen der Radmotoren 48, 49, wie es beispielsweise von Kettenfahrzeugen bekannt ist. Durch diese Kombination der elektrischen Ansteuerung der Lenkzylinder 41 und der Radmotoren 48, 49 kann das Lenkverhalten des Straßenfertigers 10 verbessert werden.

Es ist desweiteren erfindungsgemäß vorgesehen, dass die Lenkung des Straßenfertigers 10 ausschließlich durch eine elektrische Ansteuerung der Radmotoren 48 und 49 erfolgt, sodass durch eine gegensinnige Beschleunigung bzw. Abbremsen der Antriebsräder 13 der Straßenfertiger 10 gesteuert wird. Dabei wird der gesamte Bewegungsablauf bzw. Steuerungsablauf des Straßenfertigers 10 ständig von dem Prozessrechner 37 überwacht und gegebenenfalls optimiert und entsprechende Parameter an die Bedienelemente 23 bzw. die Bedieneinheiten 34 übertragen. Durch die gleichen Bedienelemente 23 bzw. das Modul 27 und/oder die Bedieneinheit 34 kann der Steuervorgang des Straßenfertigers 10 ständig kontrolliert oder gesteuert werden.

**Bezugszeichenliste:**

| | | | |
|---|---|---|---|
| 10 | Straßenfertiger | 36 | Eingabefeld |
| | | 37 | Prozessrechner |
| 12 | Fahrwerk | 38 | Pfeil |
| 13 | Antriebsrad | 39 | Pfeil |
| 14 | Rad | 40 | Pfeil |
| 15 | Fertigungsrichtung | 41 | Lenkzylinder |
| 16 | Vorratsbehälter | 42 | Lenkwinkel-Sollwertgeber |
| 17 | Verteilerschnecke | 43 | Steuermittel |
| 18 | Einbaubohle | 44 | Lenkungsachse |
| 19 | Bedienstand | 45 | Lenkwinkel-Istwertgeber |
| 20 | Fahrersitz | 46 | Steuermittel |
| 21 | Bedienpult | 47 | Steuermittel |
| 22 | Armlehne | 48 | Radmotor |
| 23 | Bedienelement | 49 | Radmotor |
| 24 | Display | | |
| 25 | Eingabefeld | | |
| 26 | Taste | | |
| 27 | Modul | | |
| 28 | Eingabefeld | | |
| 29 | Eingabemittel | | |
| 30 | Display | | |
| 31 | Sensor | | |
| 32 | Sensor | | |
| 33 | Bedieneinheit | | |
| 34 | Bedieneinheit | | |
| 35 | Display | | |

## Patentansprüche

1. Straßenfertiger (10) zur Herstellung eines Straßenbelags mit einem Fahrwerk (12), das mindestens zwei von eigenen Antrieben angetriebene Räder (13) und vier lenkbare Räder (14) aufweist, wobei die Antriebe der mindestens zwei angetriebenen Räder (13) unabhängig voneinander elektrisch ansteuerbar sind, **dadurch gekennzeichnet, dass** den lenkbaren Rädern (14) jeweils ein Lenkzylinder (41) zugeordnet ist, die individuell oder paarweise gekoppelt miteinander elektrisch ansteuerbar sind und den Rädern (13, 14) jeweils Lenkwinkel-Sollwertgeber (42) zugeordnet sind, wobei zum Lenken des Straßenfertigers (10) die Drehzahl der Antriebe der Räder (13) individuell veränderbar ist und die Räder (14) Steuerventile (43) zum Ansteuern der Lenkzylinder (41) gemäß eines Sollwertes des Lenkwinkel-Sollwertgebers (42) aufweisen.

2. Straßenfertiger (10) nach Anspruch 1, **dadurch gekennzeichnet, dass** durch elektrische Ansteuerung der Antriebe die mindestens zwei angetriebenen Räder (13) unabhängig voneinander oder paarweise zusammen betreibbar sind.

3. Straßenfertiger (10) nach Anspruch 1 oder 2, **dadurch gekennzeichnet, dass** durch elektrische Ansteuerung der Antriebe die vier angetriebenen Räder (13) unabhängig voneinander oder paarweise zusammen betreibbar sind.

4. Straßenfertiger (10) nach Anspruch 2 oder 3, **dadurch gekennzeichnet, dass** durch elektrische Ansteuerung der Antriebe die Räder (13) einzeln oder zusammen beschleunig- oder bremsbar sind.

## Claims

1. Paver (10) for producing a road covering, with a chassis (12) which has at least two wheels (13) driven by dedicated drives, and four steerable wheels (14), wherein the drives of the at least two driven wheels (13) are electrically activatable independently of one another, **characterized in that** the steerable wheels (14) are each assigned a steering cylinder (41), said steering cylinders being electrically activatable individually or in a manner coupled to each other in pairs, and the wheels (13, 14) are in each case assigned steering-angle setpoint transducers (42), wherein, in order to steer the paver (10), the rotational speed of the drives of the wheels (13) is changeable individually and the wheels (14) have control valves (43) for activating the steering cylinders (41) in accordance with a setpoint of the steering-angle setpoint transducer (42).

2. Paver (10) according to Claim 1, **characterized in that** the at least two driven wheels (13) are operable independently of one another or together in pairs by electric activation of the drives.

3. Paver (10) according to Claim 1 or 2, **characterized in that** the four driven wheels (13) are operable independently of one another or together in pairs by electric activation of the drives.

4. Paver (10) according to Claim 2 or 3, **characterized in that** the wheels (13) can be accelerated or braked individually or together by electric activation of the drives.

## Revendications

1. Finisseuse de route (10) pour la fabrication d'un revêtement de chaussée, comprenant un châssis (12) qui présente au moins deux roues (13) entraînées par des entraînements propres et quatre roues dirigeables (14), les entraînements des au moins deux roues entraînées (13) pouvant être commandés électriquement indépendamment les uns des autres, **caractérisée en ce qu'**un cylindre directeur (41) est à chaque fois associé aux roues dirigeables (14), les cylindres directeurs pouvant être commandés électriquement individuellement ou de manière accouplée les uns aux autres par paires et des capteurs de valeur de consigne d'angle de direction (42) étant à chaque fois associés aux roues (13, 14), la vitesse de rotation des entraînements des roues (13) pouvant être modifiée individuellement pour diriger la finisseuse de route (10) et les roues (14) présentant des soupapes de commande (43) pour commander les cylindres de direction (41) en fonction d'une valeur de consigne du capteur de valeur de consigne d'angle de direction (42).

2. Finisseuse de route (10) selon la revendication 1, **caractérisée en ce que** par commande électrique des entraînements, les au moins deux roues entraînées (13) peuvent être mises en fonctionnement indépendamment les unes des autres ou ensemble par paires.

3. Finisseuse de route (10) selon la revendication 1 ou 2, **caractérisée en ce que** par commande électrique des entraînements, les quatre roues entraînées (13) peuvent être mises en fonctionnement indépendamment les unes des autres ou ensemble par paires.

4. Finisseuse de route (10) selon la revendication 2 ou 3, **caractérisée en ce que** par commande électrique des entraînements, les roues (13) peuvent être accélérées ou freinées individuellement ou ensemble.
